# DEMANDE DE BREVET EUROPEEN

(11) **EP 4 845 165 A1**
(43) Date de publication de la demande: **25.11.2026**
(21) Numéro de dépôt: 26179636.1
(22) Date de dépôt: 19.05.2026
(51) Int. Cl.: H04N 21/845

(54) **GESTION DE TÉLÉCHARGEMENT PROGRESSIF ADAPTATIF POUR CONTENU NUMÉRIQUE EN DIRECT AVEC MANIFESTE PRÉDICTIF**

(30) Priorité: 23.05.2025 FR 2505544
(71) Demandeur: Orange, 92130 Issy-les-Moulineaux (FR)
(72) Inventeur: GASTE, Olivier, 92326 CHATILLON CEDEX (FR); MARCHAND, Hervé, 92326 CHATILLON CEDEX (FR)
(74) Mandataire: Plasseraud IP

(57) **Abrégé**

La présente invention concerne un procédé de gestion du téléchargement progressif adaptatif (HAS) d'un contenu numérique en direct, mis en oeuvre par un serveur de contenus (2). Le procédé comprend la génération d'un fichier Manifest (7) contenant une section prédictive (SP) décrivant des segments futurs du contenu numérique. Cette section inclut des identifiants uniques pour chaque segment futur, des timestamps indiquant leur disponibilité, et, le cas échéant, des paramètres de durée et de répétition pour décrire de manière compacte une pluralité de segments futurs. Le fichier Manifest (7) est transmis (303) à un terminal lecteur de flux multimédia (8), permettant à ce dernier de construire les URLs des segments futurs et de synchroniser leur téléchargement avec leur disponibilité effective. Cette approche réduit la fréquence de mise à jour du fichier Manifest (7), diminue la consommation de bande passante et optimise les ressources serveur (2) et client (8). L'invention s'applique notamment au streaming adaptatif HTTP en direct.

## Description

### Domaine technique

La présente divulgation relève du domaine des contenus multimédias numériques, à savoir les contenus audio et/ou vidéo numériques. Plus précisément, l'invention concerne la fourniture de contenus numériques accessibles selon une technique dite de téléchargement progressif adaptatif, notamment les contenus numériques en direct, ou « live ».

### Technique antérieure

L'accès à un contenu multimédia, tel que la télévision ou la vidéo à la demande, est possible aujourd'hui, pour la plupart des terminaux de restitution.

Le terminal émet généralement une requête à destination d'un serveur, en indiquant le contenu choisi et il reçoit en retour un flux de données numériques relatives à ce contenu.

Le terminal est adapté pour recevoir ces contenus numériques sous forme de données multimédia et pour en faire une restitution. Cette restitution consiste à fournir au niveau du terminal le contenu numérique sous une forme accessible à l'utilisateur. Par exemple, des données reçues correspondant à une vidéo sont généralement décodées, puis restituées au niveau du terminal sous la forme d'un affichage de la vidéo correspondante avec sa bande-son associée. Dans la suite, par souci de simplification, on assimilera le contenu numérique à une vidéo et la restitution par le terminal, ou consommation par l'utilisateur du terminal, à une visualisation sur l'écran du terminal.

La diffusion de contenus numériques est souvent basée sur des protocoles client-serveur de la famille HTTP (de l'anglais « HyperText Transfer Protocol »). En particulier, le téléchargement en mode progressif des contenus numériques, aussi appelé streaming, permet de transporter et consommer les données en temps réel, c'est-à-dire que les données numériques sont transmises sur le réseau et restituées par le terminal au fur et à mesure de leur arrivée. Le terminal reçoit et stocke une partie des données numériques dans une mémoire tampon avant de les restituer. Ce mode de distribution est particulièrement utile quand le débit dont dispose l'utilisateur n'est pas garanti pour le transfert en temps réel de la vidéo, en fonction par exemple de la fluctuation de la bande passante disponible.

Le téléchargement progressif adaptatif, en anglais HTTP Adaptative Streaming, d'abréviation HAS, permet de surcroît de diffuser et recevoir des données suivant différentes qualités correspondant par exemple à différents débits. Ces différentes qualités sont décrites dans un fichier de paramètres disponible en téléchargement sur un serveur de données, par exemple un serveur de contenus. Quand le terminal client souhaite accéder à un contenu, ce fichier de description permet de sélectionner le bon format pour le contenu à consommer en fonction de la bande passante disponible ou des capacités de stockage et de décodage du terminal client. Ce type de technique permet notamment de tenir compte des variations de bande passante sur la liaison entre le terminal client et le serveur de contenus.

Il existe plusieurs solutions techniques pour faciliter la distribution d'un tel contenu en streaming, comme par exemple les solutions propriétaires Microsoft^{®} Smooth Streaming, Apple^{®} HLS, Adobe^{®} HTTP Dynamic Streaming ou encore la norme MPEG-DASH de l'organisme ISO/IEC qui sera décrite ci-après. Ces méthodes proposent d'adresser au client un ou plusieurs fichiers de description intermédiaires, appelés aussi documents ou manifestes, contenant les adresses des différents segments aux différentes qualités du contenu multimédia.

Ainsi, la norme MPEG-DASH (pour l'anglais "Dynamic Adaptive Streaming over HTTP", en français « diffusion en flux adaptatif dynamique sur http ») est un standard de format de diffusion audiovisuelle sur Internet. Il se base sur la préparation du contenu en différentes présentations de qualité et débit variables, découpées en segments de courte durée (de l'ordre de quelques secondes), également appelés « chunks ». Chacun de ces segments est rendu disponible individuellement au moyen d'un protocole d'échange. Le protocole principalement ciblé est le protocole HTTP, mais d'autres protocoles (par exemple FTP) peuvent également être utilisés. L'organisation des segments et les paramètres associés sont publiés dans un manifeste au format XML.

Classiquement, les nouveaux segments audio / vidéo sont produits par le serveur de contenu, puis introduits dans le fichier manifeste à l'issue de cette étape de production. Il est donc toujours nécessaire de produire d'abord les segments, de les exposer à travers les réseaux de distribution de contenus (en anglais, CDN pour « Content Delivery Network ») puis de les décrire dans le fichier manifeste pour que ces segments soient récupérés par les clients.

La consommation de contenus numériques en téléchargement progressif adaptatif (HAS) tend à se démocratiser. Elle est notamment utilisée par de nombreux services de streaming (en français, diffusion en mode continu, ou lecture en continu), mais également par certains décodeurs TV, ou set-top-box, qui l'utilisent pour accéder à des contenus délinéarisés, tels que la vidéo à la demande (VOD), la diffusion en différé de programmes télévisuels (Replay), ou encore les offres de type Network PVR (pour « Network Personal Video Recorder », i.e. un service d'enregistrement des contenus numériques, effectué par le fournisseur de contenus lui-même plutôt qu'au domicile de l'utilisateur final).

En outre, d'autres dispositifs tels que des appareils lecteurs de flux multimédia en temps réel accèdent également aux contenus numériques en mode de téléchargement adaptatif progressif pour des contenus télévisuels en temps réel (ou Live). C'est le cas par exemple de l'appareil Chromecast^{®} développé par Google^{®}, ou de la CléTV^{®} d'Orange^{®}. De tels appareils, plus génériquement désignés sous le nom de Clef HDMI, peuvent également être utilisés pour accéder à des contenus de type vidéo à la demande.

Les fournisseurs de contenus peuvent choisir de construire des segments de durée fixe, par exemple 2s, ou des segments de taille fixe, et donc de durée variable, selon que le segment correspond à un contenu statique ou plus ou moins dynamique.

Dans le cadre d'un contenu en direct, ou « Live », dans lequel les segments seraient tous de même durée, par exemple 2s, le terminal client récupère classiquement le fichier de description, ou Manifeste, toutes les deux secondes, pour pouvoir être toujours au plus près du direct, et avoir toujours accès au dernier segment produit par le serveur de contenus.

Il est cependant de plus en plus fréquent d'offrir au client la possibilité de réaliser une lecture de tels contenus « Live » en décalé, par exemple pour lui permettre de revenir en arrière dans le contenu « Live » (fonctionnalités de type « Live Control » ou « Start Over » par exemple). Il est donc nécessaire que le fichier de description ne se contente pas de décrire les dernières secondes du contenu en direct (par exemple les soixante dernières secondes), mais une durée beaucoup plus importante du contenu (par exemple l'ensemble des segments des quatre ou huit dernières heures du contenu).

Un tel fichier manifeste, pouvant représenter par exemple quatre heures de contenu, représente un volume de données important, jusqu'à 400ko par exemple. Lorsqu'on veut offrir au client la possibilité de réaliser une lecture de contenus « Live » en décalé, le fichier de description est donc beaucoup plus volumineux, mais doit cependant toujours être récupéré toutes les deux secondes, pour permettre au client de rebasculer vers le direct à tout instant.

Cela accroît donc le temps de récupération de ce fichier de description par le terminal client, mais également la bande passante occupée, et les ressources du processeur (CPU) du terminal client, mobilisées pour l'analyse syntaxique (en anglais « parsing ») du fichier de description XML (pour l'anglais « eXtended Markup Language ») récupéré.

Pour résoudre ces problèmes et réduire la consommation de bande passante due au téléchargement fréquent d'un fichier manifeste volumineux, une initiative est en cours de discussion et de normalisation au sein du groupe MPEG-DASH, selon laquelle le terminal client ne récupèrerait pas l'intégralité du fichier manifeste, mais seulement les parties de ce fichier qu'il n'aurait pas encore téléchargées.

Il existe cependant un besoin d'une technique alternative de gestion de téléchargement progressif adaptatif HAS permettant de résoudre ces inconvénients de l'art antérieur.

### Exposé

La présente divulgation vient améliorer la situation.

Il est proposé un procédé de gestion du téléchargement progressif adaptatif, HAS, d'un contenu numérique en direct depuis un serveur de contenus vers un terminal lecteur de flux multimédia, comprenant une génération d'un fichier de description du contenu numérique, comprenant une liste de segments temporels du contenu, dans lequel la génération comprend une construction d'une section prédictive du fichier de description, la section décrivant, pour au moins un segment futur du contenu numérique, un identifiant réservé pour le segment futur et une indication temporelle d'un instant à partir duquel le segment futur sera disponible pour le téléchargement.

La génération d'un fichier de description (ou manifeste) comprenant une section prédictive permet d'anticiper la disponibilité des segments futurs d'un contenu numérique en direct. Une telle anticipation permet de réduire la fréquence de génération de ce fichier par le serveur de contenus ainsi que la fréquence de téléchargement du fichier manifeste par le terminal client. Une telle prédiction, dans le fichier de description, des segments audio/vidéo qui vont être produits pour le contenu permet de réduire :
a. La consommation de bande passante : le terminal n'a plus besoin de télécharger le fichier manifeste complet à chaque production de nouveaux segments, mais peut s'appuyer sur les informations prédictives pour planifier les téléchargements des segments futurs ;
b. La charge de traitement sur le terminal client : la réduction de la fréquence de téléchargement du manifeste diminue les ressources CPU nécessaires pour analyser (« parser ») le fichier manifeste, particulièrement lorsque celui-ci est volumineux ;
c. L'optimisation des ressources serveur : le serveur n'a plus besoin de régénérer le fichier manifeste à chaque production de segment, mais uniquement après un certain nombre de segments produits, ce qui réduit la charge de traitement côté serveur.

On réalise ainsi une optimisation des performances globales du système de streaming adaptatif HTTP (HAS), tant au niveau du serveur que du terminal client, tout en maintenant une synchronisation efficace avec les segments produits en temps réel.

Selon un autre aspect, il est proposé un serveur de gestion du téléchargement progressif adaptatif, HAS, d'un contenu numérique en direct, comprenant des moyens de mise en oeuvre d'un tel procédé de gestion de téléchargement progressif adaptatif.

Selon un autre aspect, il est proposé un programme informatique comportant des instructions pour la mise en oeuvre d'un procédé de gestion du téléchargement progressif adaptatif, HAS, d'un contenu numérique en direct tel que défini dans les présentes lorsque ce programme est exécuté par un processeur d'un tel serveur. Selon un autre aspect, il est proposé un support d'enregistrement non transitoire, lisible par un ordinateur, sur lequel est enregistré un tel programme.

Selon un autre aspect, il est proposé un procédé de téléchargement progressif adaptatif, HAS, d'un contenu numérique en direct depuis un serveur de contenus par un terminal lecteur de flux multimédia, comprenant un téléchargement d'un fichier de description du contenu numérique, comprenant une liste de segments temporels du contenu, dans lequel le fichier de description téléchargé comprend une section prédictive, décrivant, pour au moins un segment futur du contenu numérique, un identifiant réservé pour le segment futur et une indication temporelle d'un instant à partir duquel le segment futur sera disponible pour le téléchargement.

Ainsi, pour le terminal lecteur de flux multimédia, la fréquence de téléchargement du fichier manifeste est réduite par rapport à l'art antérieur. Par exemple, pour un fichier de description de segments d'une durée de 2s, nécessitant pour le terminal client, selon l'art antérieur, de récupérer le fichier manifeste toutes les 2s, il est possible de diviser par trente la fréquence de téléchargement du fichier manifeste, si ce dernier contient une section prédictive pour les segments des soixante prochaines secondes du contenu en direct.

Selon un autre aspect, il est proposé un terminal lecteur de flux multimédia comprenant des moyens de mise en oeuvre d'un tel procédé de téléchargement progressif adaptatif.

Selon un autre aspect, il est proposé un programme informatique comportant des instructions pour la mise en oeuvre de tout ou partie d'un procédé de téléchargement progressif adaptatif tel que défini dans les présentes lorsque ce programme est exécuté par un processeur d'un tel terminal lecteur de flux multimédia. Selon un autre aspect, il est proposé un support d'enregistrement non transitoire, lisible par un ordinateur, sur lequel est enregistré un tel programme.

De tels supports d'enregistrement peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, de tels supports d'enregistrement peuvent être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

Les caractéristiques exposées dans les paragraphes suivants peuvent, optionnellement, être mises en oeuvre, indépendamment les unes des autres ou en combinaison les unes avec les autres.

La section prédictive décrit, pour le ou les segment(s) futur(s) :
a. un instant de début du ou des segment(s) futur(s) ;
b. une durée du ou des segment(s) futur(s).

En décrivant, dans la section prédictive du fichier manifeste, pour au moins un segment futur, un instant de début et une durée, le procédé permet au terminal client de planifier précisément le téléchargement des segments futurs. Grâce à l'indication de l'instant de début et de la durée, le terminal peut déterminer avec exactitude le moment où chaque segment futur sera disponible pour le téléchargement. En outre, ces paramètres permettent au terminal client de construire l'adresse de téléchargement de ces segments futurs, avant même qu'ils n'aient été produits par le serveur de contenus.

Les segments temporels de contenu sont de même durée et la section prédictive décrit également, pour le ou les segment(s) futur(s), un nombre de répétitions du ou des segment(s) futur(s).

En décrivant, dans la section prédictive du fichier manifeste, pour au moins un segment futur, un nombre de répétitions lorsque les segments temporels sont de même durée, un tel procédé permet de réduire la taille du fichier manifeste. En utilisant un paramètre de répétition (par exemple, r), il devient possible de décrire plusieurs segments consécutifs de même durée avec une seule ligne dans le manifeste, au lieu de décrire chaque segment individuellement. Cela diminue donc le volume de données à transmettre.

En outre, le terminal client peut interpréter rapidement les informations de la section prédictive grâce à une structure compacte, ce qui réduit la charge de traitement (parsing) nécessaire pour analyser le fichier manifeste.

La génération du fichier de description n'est renouvelée qu'à l'issue d'une production, par le serveur de contenus, du ou des segment(s) futur(s) décrit(s) dans la section prédictive.

Le serveur n'a plus besoin de régénérer le fichier manifeste à chaque production de segment, mais uniquement après qu'un certain nombre de segments futurs prédits aient été produits. Cela diminue la charge de traitement sur le serveur. En espaçant les régénérations du fichier manifeste, le serveur peut allouer ses ressources à d'autres tâches, améliorant ainsi son efficacité globale.

Un tel procédé de téléchargement progressif adaptatif comprend en outre :
a. une construction, à partir de la section prédictive, d'adresses de téléchargement d'une pluralité de segments futurs du contenu numérique ;
b. un téléchargement de l'un des segments futurs de la pluralité, à l'adresse de téléchargement construite pour le segment futur, à partir de l'instant associé à l'indication temporelle pour le segment futur.

Ainsi, pour le terminal lecteur de flux multimédia, la séquence de constructions des URLs de téléchargement et de téléchargement des segments est modifiée par rapport à l'art antérieur. Selon l'art antérieur, le terminal client construisait l'adresse URL de téléchargement d'un segment à partir du fichier manifeste, puis téléchargeait le segment depuis cette URL. Selon la technique de l'invention, en revanche, le terminal client peut construire les URLs d'une pluralité de segments futurs, puis attendre pour télécharger chacun de ces segments que l'instant temporel corresponde au timestamp de mise à disposition du segment indiqué dans le manifeste prédictif.

Selon un autre aspect, le téléchargement du fichier de description n'est renouvelé qu'à l'issue du téléchargement de la pluralité de segments futurs décrits dans la section prédictive.

Le serveur de contenus, le terminal lecteur de flux multimédia et les programmes d'ordinateur correspondants précités présentent au moins les mêmes avantages que ceux conférés par le procédé de gestion de téléchargement progressif adaptatif ou par le procédé de téléchargement progressif adaptatif selon la présente invention.

### Brève description des dessins

D'autres caractéristiques, détails et avantages apparaîtront à la lecture de la description détaillée ci-après, et à l'analyse des dessins annexés, sur lesquels :
**Fig. 1**

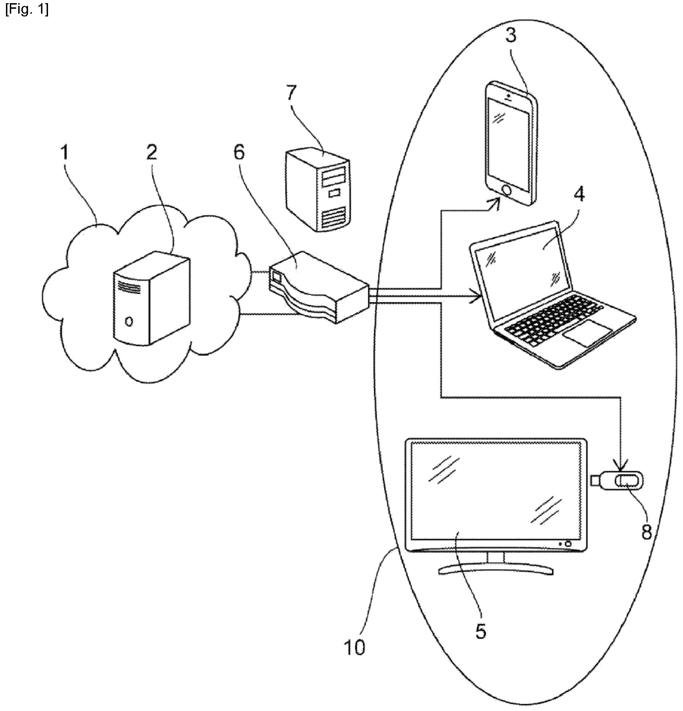

   [Fig. 1] présente un exemple d'une architecture de téléchargement progressif basée sur l'utilisation du téléchargement progressif adaptatif selon un mode de réalisation de l'invention.
**Fig. 2**

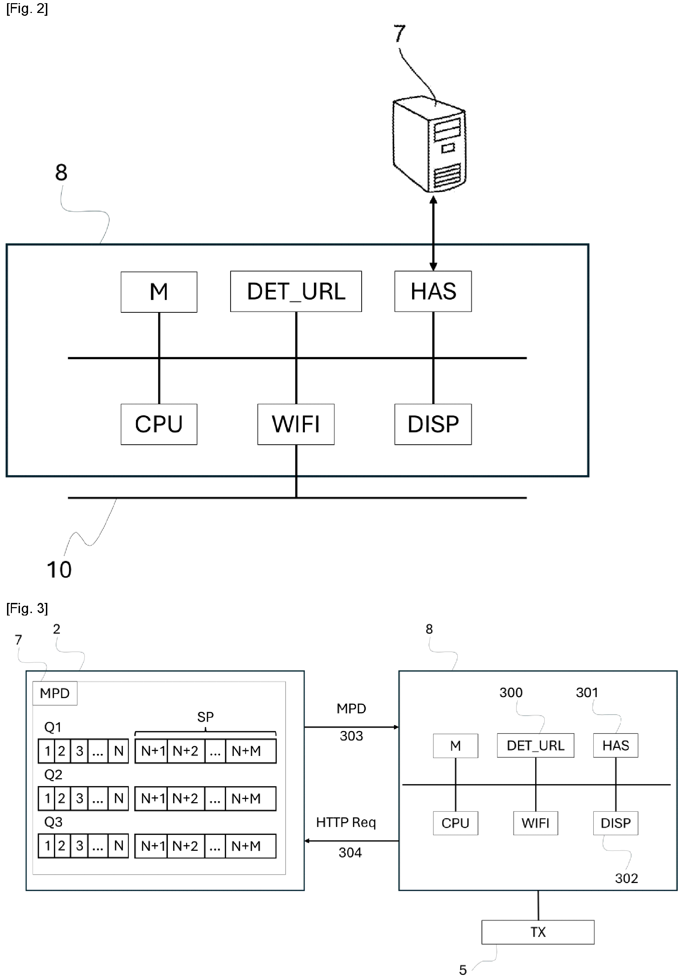

   [Fig. 2] illustre une architecture d'un terminal lecteur de flux multimédia de la figure 1 selon un mode de réalisation.
**Fig. 3**
   [Fig. 3] décrit sous forme de schéma bloc un procédé de gestion de téléchargement progressif adaptatif pour contenu numérique en direct avec manifeste prédictif selon un mode de réalisation.

### Description des modes de réalisation

Le principe général de l'invention repose, dans le cadre du téléchargement progressif adaptatif d'un contenu numérique en direct, sur la génération d'une section prédictive dans le fichier manifeste, permettant de décrire des segments futurs du contenu.

Un segment futur désigne un segment audio ou vidéo d'un contenu numérique en direct qui n'a pas encore été produit par le serveur de contenu, mais dont la production est prévue à un instant ultérieur.

Dans un mode de réalisation, ce segment est décrit de manière anticipée dans une section prédictive du fichier manifeste, avec des informations telles que :
1. Un identifiant réservé, permettant d'identifier de manière unique le segment futur.
2. Un instant de disponibilité, indiquant le moment précis (timestamp) à partir duquel le segment sera accessible pour le téléchargement.
3. Des paramètres optionnels, tels que la durée du segment ou un nombre de répétitions, pour optimiser la description des segments futurs.

Cette anticipation permet au terminal client de planifier le téléchargement des segments futurs sans attendre leur production effective, améliorant ainsi l'efficacité du système de streaming adaptatif, par réduction de la fréquence de génération du fichier manifeste côté serveur de contenus et de la fréquence de téléchargement de ce fichier manifeste côté terminal client (également appelé « player HAS »).

On s'attache dans la suite de ce document à décrire un mode de réalisation qui, à titre d'exemple, repose sur la norme MPEG-DASH. La personne du métier transposera sans difficulté les exemples donnés à d'autres techniques de streaming adaptatif, tels que HLS ou MSS par exemple. En effet, l'invention décrite n'est pas limitée au contexte MPEG-DASH mais peut être généralisée à tout contexte de streaming adaptatif dans lequel un contenu est décrit sous forme de segments dans un fichier de description, ou manifeste, précisant différents paramètres de ces segments.

On rappelle qu'un fichier manifeste est un fichier de description utilisé dans le cadre du téléchargement progressif adaptatif (HAS, pour "HTTP Adaptive Streaming"). Il contient des informations détaillées sur les segments audio et/ou vidéo d'un contenu numérique, permettant au terminal client de localiser, télécharger et restituer ces segments.

Le fichier manifeste inclut notamment :
1. Les adresses des segments, sous forme d'URL ou de modèles d'URL permettant d'accéder aux segments.
2. Les caractéristiques des segments, telles que leur durée, leur qualité (résolution, débit binaire), et leur type (audio, vidéo, sous-titres, etc.).
3. La chronologie des segments, indiquant l'ordre et les instants de disponibilité des segments.

Il est maintenant fait référence à la figure 1, qui illustre un exemple d'une architecture de téléchargement progressif basée sur l'utilisation du téléchargement progressif adaptatif selon l'invention.

Le terminal 3, par exemple un téléphone intelligent de type « Smartphone », le terminal 4, par exemple un ordinateur portable, et le terminal 8, par exemple une clef HDMI connectée à un téléviseur 5, se trouvent dans cet exemple situé dans un réseau local (LAN, 10) piloté par une passerelle domestique 6. Le contexte du réseau local est donné à titre d'exemple et pourrait être transposé aisément à un réseau Internet de type « best effort », un réseau d'entreprise, ou un réseau de radiocommunication mobile de type 3G, 3G+, 4G ou 5G, etc.

Un serveur de contenus numériques 2 se trouve selon cet exemple dans le réseau étendu (WAN, 1). Le serveur de contenus 2 reçoit par exemple des chaînes de contenus de télévision numérique en provenance d'un réseau de télévision diffusée, non représenté, et/ou d'autres contenus audio et/ou vidéo en direct, ou « Live », et les met à disposition des terminaux clients.

Plus généralement, on s'intéresse, dans le contexte de la présente invention, au cas d'un terminal lecteur de flux multimédia qui souhaite accéder au contenu présent sur un serveur de contenus 2, appartenant à un réseau de communication 1. Le terminal lecteur de flux multimédia (8 par exemple) accède au réseau 1 par l'intermédiaire d'un point d'accès 6.

En outre, bien que la figure 1 illustre le cas d'un réseau local 10, dans lequel le point d'accès 6 est une passerelle résidentielle, on comprendra que l'invention s'applique également au cas où le point d'accès 6 est une station de base d'un réseau de radiocommunication de type 3G, 3G+, 4G, 5G ou 6G par exemple, auquel un terminal client mobile (par exemple un « smartphone » ou téléphone intelligent 3) accède pour obtenir le téléchargement d'un contenu en direct depuis un serveur de contenus 2 présent sur ce réseau.

Les terminaux clients 3, 4 et 8 peuvent entrer en communication avec le serveur de contenus 2 pour recevoir un ou plusieurs contenus (films, documentaires, séquences publicitaires, etc.). En général, un terminal émet une requête à destination d'un serveur, en indiquant le contenu choisi et il reçoit en retour un flux de données numériques relatives à ce contenu. Dans le cadre d'un réseau de communication local, une telle requête transite par la passerelle d'accès au réseau, par exemple la passerelle résidentielle. Plus généralement, une telle requête transite par le point d'accès 6 au réseau étendu 1.

Le terminal est adapté pour recevoir ces contenus numériques sous forme de données multimédia et pour en faire une restitution. Cette restitution consiste à fournir au niveau du terminal le contenu numérique sous une forme accessible à l'utilisateur. Par exemple, des données reçues correspondant à une vidéo sont généralement décodées, puis restituées au niveau du terminal sous la forme d'un affichage de la vidéo correspondante avec sa bande-son associée.

Il est fréquent, dans ce contexte client-serveur, de recourir, pour échanger les données entre les terminaux client 3, 4 et 8 et le serveur 2, à une technique de téléchargement progressif adaptatif, en anglais « adaptive streaming », basée sur le protocole http, et abrégée en HAS. Ce type de technique permet notamment d'offrir une bonne qualité de contenus à l'utilisateur en tenant compte des variations de bande passante qui peuvent se produire sur la liaison globale entre le terminal client 3, 4 et 8 et le serveur de contenus 2.

Classiquement, différentes qualités peuvent être encodées pour le même contenu d'une chaîne, correspondant par exemple à différents débits. Plus généralement, on parlera de qualité pour se référer à une certaine résolution du contenu numérique (résolution spatiale, temporelle, niveau de qualité associée à la compression vidéo et/ou audio) avec un certain débit. Chaque niveau de qualité est lui-même découpé sur le serveur de contenus en segments temporels (ou « fragments » de contenu, en anglais « chunks », ces trois mots étant utilisés indifféremment dans l'ensemble de ce document).

La description de ces différentes qualités et de la segmentation temporelle associée, ainsi que les fragments de contenu, sont décrits pour le terminal client et mis à sa disposition via leurs adresses Internet (URI : Universal Ressource Identifier). L'ensemble de ces paramètres (qualités, adresses des fragments, etc.) est en général regroupé dans un fichier de paramètres, dit fichier de description. On notera que ce fichier de paramètres peut être un fichier informatique ou un ensemble d'informations descriptives du contenu, accessible à une certaine adresse.

Les terminaux 3, 4 et 8 possèdent leurs propres caractéristiques en termes de capacité de décodage, d'affichage, etc. Dans un contexte de téléchargement adaptatif progressif, ils peuvent adapter leurs requêtes pour recevoir et décoder le contenu demandé par l'utilisateur à la qualité qui leur correspond au mieux. On s'intéresse plus particulièrement dans la suite de la description à la Clef HDMI 8, qui est par exemple une CléTV^{®} d'Orange^{®}.

Le point d'accès 6 est dans cet exemple une passerelle domestique qui assure le routage des données entre le réseau étendu 1 et le réseau local 10, gère les contenus numériques en assurant notamment leur réception en provenance du réseau. Leur décodage est effectué par un lecteur de flux multimédia intégré à la Clef HDMI 8. En variante, on peut également considérer tout autre terminal lecteur de flux multimédia présent dans le réseau local 10, notamment au niveau d'un élément de type STB (de l'anglais Set-Top-Box, en français boîtier adaptateur) ou console de jeux (non représenté) associé à un téléviseur.

Dans cet exemple, pour visualiser un contenu, le terminal 8 interroge tout d'abord la passerelle de service 6 pour obtenir une adresse du document de description 7 du contenu (par exemple, un contenu C1) souhaité. La passerelle de service 6 répond en fournissant au terminal l'adresse du fichier de description 7. Dans la suite, on supposera que ce fichier est un fichier de type manifeste selon la norme MPEG-DASH (noté « C.mpd ») et on se réfèrera indifféremment, selon le contexte, à l'expression « fichier de description » ou « manifeste ».

Alternativement, ce fichier peut être récupéré directement auprès d'un serveur Internet local ou externe au réseau local.

Un fichier manifeste (MPD) conforme à la norme MPEG-DASH décrit des contenus numériques dans une syntaxe XML (de l'Anglais « eXtended Markup Language »), comprenant une liste de contenus sous forme de fragments classiquement décrits entre une balise ouvrante ((SegmentList)) et une balise fermante ((/SegmentList)). La découpe en fragments permet notamment de s'adapter finement aux fluctuations de la bande passante. Chaque fragment correspond à une certaine durée (champ « duration ») avec plusieurs niveaux de qualité et permet de générer leurs adresses (URL - Uniform Resource Locator).

Selon l'art antérieur, la section <SegmentTimeline> de <SegmentTemplate> décrit les segments disponibles qui ont déjà été produits par le serveur de contenus. Un exemple est fourni ci-après.

```
<SegmentTemplate timescale="30000"
 media="155_video_1_2_$Time$.mp4?m=1545421124"
 initialization="155_video_1_2_init.mp4?m=1545421124" startNumber="710">
 <SegmentTimeline>
   <S t="255197799" d="360360" r="8"/>
   <S t="258441039" d="334334"/>
 </SegmentTimeline>
 </SegmentTemplate>
```

L'attribut « media » dans les propriétés <SegmentTemplate> définit l'URL, ou l'adresse de téléchargement, à laquelle le terminal client adresse sa requête de segment. Par défaut, cette URL utilise une syntaxe $Number$ variable pour identifier le segment spécifique demandé, où Number correspond à l'identifiant du segment. Lorsqu'un terminal client demande le segment, il remplace la variable par l'identifiant numéroté du segment. Dans l'exemple illustré ci-dessus, les segments sont identifiés par leur données d'horodatage, et la variable $Time$ remplace la variable $Number$ dans l'URL de l'attribut « media ». Ainsi, lorsqu'un terminal client demande le segment, il remplace la variable par l'heure de début du segment. Cette heure de début est identifiée dans les propriétés de la valeur t du segment (S), dans l'objet <SegmentTimeline>.

En effet, l'objet <SegmentTimeline> permet de décrire la chronologie des segments vidéo ou audio dans un contenu multimédia. Les valeurs t, d et r dans l'objet <SegmentTimeline> sont utilisées pour spécifier le moment de début, la durée et la répétition des segments, respectivement, comme décrit plus en détail ci-après.

t (time) désigne le temps de début du segment en millisecondes. Cela indique à quel moment le segment commence dans la chronologie globale du contenu multimédia. Par exemple, t="1000" signifie que le segment commence à 1000 millisecondes (1 seconde) après le début du flux.

d (duration) désigne la durée du segment en millisecondes. Cela indique combien de temps dure ce segment. Par exemple, d="5000" signifie que le segment dure 5000 millisecondes (5 secondes).

r (repeat) désigne la répétition du segment. Si ce paramètre est présent, cela indique combien de fois le segment doit être répété après sa durée initiale. Par exemple, r="3" signifie que le segment sera répété trois fois après sa première occurrence, augmentant ainsi le nombre total de segments.

Une fois qu'il dispose des adresses de fragments correspondant au contenu souhaité, le point d'accès 6 procède à l'obtention des fragments via un téléchargement à ces adresses. On notera que ce téléchargement s'opère ici, traditionnellement, au travers d'une URL HTTP, mais pourrait également s'opérer au travers d'une adresse universelle (URI) décrivant un autre protocole (dvb://monsegmentdecontenu par exemple).

Le téléviseur 5, via sa connexion à la clef HDMI 8 par branchement sur son port HDMI, est utilisé pour restituer un programme télévisuel en direct, désigné sous le nom de contenu C1. Un tel contenu C1 est décrit dans un fichier manifeste 7.

Dans un exemple, un utilisateur souhaite visualiser ce contenu multimédia C1 sur son téléviseur 5 connecté à une clé HDMI 8. La clef HDMI 8 est connectée en WiFi^{®} directement à la passerelle résidentielle 6. En variante, la clef HDMI 8 pourrait également être conforme à la norme IEEE 1905.1, et être connectée à la passerelle résidentielle 6 par une technologie de Courant Porteur en Ligne.

Les fragments de contenu obtenus par la passerelle résidentielle 6 sont par exemple transmis en WiFi^{®} à la clef HDMI 8, qui pilote leur affichage sur l'écran du téléviseur 5, pour restitution à l'utilisateur après décodage par un lecteur de flux multimédia intégré à la clef HDMI 8.

Dans un mode de réalisation, on propose d'introduire, dans le fichier manifeste, un nouvel objet, correspondant à une section prédictive décrivant un ou plusieurs segments futurs du contenu C1, non encore produits par le serveur de contenus.

Ce nouvel objet, que l'on peut appeler par exemple <PredictifSegmentTimeline>, peut prendre la forme suivante.

```
<SegmentTemplate timescale="30000"
 media="155_video_1_2_$Time$.mp4?m=1545421124"
 initialization="155_video_1_2_init.mp4?m=1545421124" startNumber="710">
 <PredictifSegmentTimeline>
   <S t="255217799" d="2000" r="10"/>
 </ PredictifSegmentTimeline >
 <SegmentTimeline>
   <S t="255197799" d="2000" r="60"/>
 </SegmentTimeline>
 </SegmentTemplate>
```

L'exemple d'objet <PredictifSegmentTimeline> ci-dessus décrit que le premier segment futur débute à t="255217799" et qu'il pourra être obtenu à l'adresse media="155_video_1_2_255217799.mp4?m=1545421124" quand il aura été produit par le serveur de contenu, au timestamp correspondant à sa disponibilité au téléchargement.

De même, <PredictifSegmentTimeline> indique que le deuxième segment débute à l'instant t+d=255217799+2000, que le troisième segment débute à t+2d, et ainsi de suite pour r=10 segments consécutifs de même durée d=2000ms.

Dans un exemple où tous les segments ne seraient pas de même durée, l'objet <PredictifSegmentTimeline> pourrait comprendre plusieurs lignes correspondant aux groupements de segments de même durée.

Par exemple :

```
<SegmentTemplate timescale="30000"
 media="155_video_1_2_$Time$.mp4?m=1545421124"
 initialization="155_video_1_2_init.mp4?m=1545421124" startNumber="710">
 <PredictifSegmentTimeline>
   <S t="255197799" d="360360" r="8"/>
   <S t="258441039" d="334334">
 </ PredictifSegmentTimeline >
 <SegmentTimeline>
   <S t="255197799" d="2000" r="60"/>
 </SegmentTimeline>
 </SegmentTemplate>
```

Ainsi, le premier segment débute à l'instant t="255197799" pour une durée d="360360" ; il y a répétition de r=8 segments de même durée d="360360" ; puis, le segment suivant débute à t="258441039" et a une durée d="334334".

La section <PredictifSegmentTimeline> décrit donc des segments qui seront produits dans l'avenir et disponibles à partir d'un certain timestamp.

La figure 2 représente une architecture d'un terminal lecteur de flux multimédia selon un tel mode de réalisation de l'invention, par exemple la clef HDMI 8 de la figure 1, ou un boîtier adaptateur de type set-top box, une console de jeux, etc.

Il comprend, classiquement, des mémoires M associées à un processeur CPU. Les mémoires peuvent être de type ROM (de l'anglais « Read Only Memory ») ou RAM (de l'anglais « Random Access Memory ») ou encore Flash. La clef HDMI 8 communique avec un point d'accès au réseau Internet étendu, par exemple la passerelle résidentielle 6, via le module WIFI pour une communication locale sans fils.

En variante, la communication entre la clef HDMI 8 et la passerelle 6 pourrait s'opérer via une technologie de type Courant Porteur en Ligne conforme à la norme IEEE 1905.1 : dans ce cas, dans l'architecture de la figure 2, le module WIFI serait remplacé par un module CPL.

Dans une autre variante, le terminal lecteur de flux multimédia dont l'architecture est présentée en figure 2 pourrait être un téléphone mobile, tel que le téléphone intelligent de la figure 1. Dans ce cas, l'architecture de la figure 2 pourrait comprendre un module de radiocommunication RC, pour la communication du terminal avec la station de base d'un réseau 4G ou 5G, en parallèle de, ou en lieu et place du module WIFI.

La clef HDMI 8 comprend en outre un module de téléchargement progressif adaptatif HAS apte à demander un téléchargement progressif de l'un des contenus à l'une des qualités proposées dans un fichier de description 7. Ce fichier de description 7 peut être enregistré par exemple dans les mémoires M de la clef HDMI 8 ou se trouver à l'extérieur. Ce fichier de description 7 comprend notamment une section prédictive, relative à des segments futurs du contenu, qui n'ont pas encore été produits par le serveur de contenu, et ne sont donc pas encore accessibles au téléchargement par le terminal 8.

La clef HDMI 8 comprend également un module DET_URL de construction, à partir des données présentes dans cette section prédictive du fichier manifeste 7, des adresses URL de téléchargement des segments futurs du contenu. Ce module DET_URL peut procéder à la construction des adresses URL de l'ensemble des segments futurs (ou, en variante de seulement une partie d'entre eux) qui font l'objet de la section prédictive, dès réception du fichier manifeste 7, et sans attendre que ces segments futurs soient disponibles au téléchargement.

Les adresses URL des segments futurs ainsi construites par le module DET_URL peuvent être provisoirement stockées dans la mémoire M, en attendant l'instant temporel de mise à disposition de ces segments par le serveur de contenu 2. Lorsque l'instant courant correspond au temps t de début d'un segment futur décrit dans la section prédictive, le module HAS récupère l'adresse URL de ce segment dans la mémoire M, et demande le téléchargement de ce segment à l'adresse URL récupérée.

Le terminal client 8 comprend également un module DISP de commande de l'affichage du contenu sur un écran d'un terminal de restitution, par exemple le téléphone intelligent 3 ou le téléviseur 5. Un tel module DISP est un module de gestion de l'interface avec le terminal de restitution de l'utilisateur, par lequel la clef HDMI 8 obtient par exemple des informations sur les éventuelles interactions de l'utilisateur avec le terminal de restitution (action sur la télécommande du téléviseur par exemple par appui sur la touche volume ou une touche de changement de canal, ou sélection dans un menu en surbrillance sur l'écran du téléviseur d'un contenu à télécharger), et par lequel elle peut piloter l'affichage sur l'écran du terminal de restitution de fenêtres pop-up, lui permettant de délivrer des messages, notamment des informations relatives à la navigation dans le contenu « Live », par exemple en cas de retour en arrière du client dans ce contenu en direct.

La clef HDMI 8 selon un mode de réalisation de l'invention peut aussi contenir d'autres modules comme un disque dur (non représenté) pour le stockage des fragments vidéo, un module de contrôle d'accès aux contenus, un module de traitement des commandes reçues d'une tablette ou d'un smartphone sur lesquels est installée l'application de pilotage de la clef HDMI, grâce à laquelle l'utilisateur peut en contrôler le fonctionnement, etc. En effet, une telle clef HDMI 8 ne contient généralement pas de module d'interface E/S, et c'est le module d'interface E/S du téléphone intelligent 3 de l'utilisateur ou de sa tablette 4, ou du téléviseur 5, qui est utilisée par ce dernier pour choisir par exemple son contenu.

On notera que le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

Plus généralement, une telle clef HDMI 8 comprend une mémoire vive (par exemple une mémoire RAM), une unité de traitement équipée par exemple d'un processeur CPU, et pilotée par un programme d'ordinateur, représentatif du module de gestion du téléchargement progressif adaptatif HAS, stocké dans une mémoire morte (par exemple une mémoire ROM ou un disque dur). A l'initialisation, les instructions de code du programme d'ordinateur sont par exemple chargées dans la mémoire vive avant d'être exécutées par le processeur CPU de l'unité de traitement. La mémoire vive contient notamment le fichier de description manifest 7, et les adresses URL des segments futurs construites par le module DET_URL à partir des informations figurant dans la section prédictive de ce manifeste. Le processeur de l'unité de traitement pilote la détermination des adresses de téléchargement des segments futurs décrits dans la section prédictive du fichier manifeste, l'affichage de fenêtres pop-up sur l'écran du terminal de restitution, et le suivi des timestamps des segments futurs pour piloter leur téléchargement dès leur instant de mise à disposition par le serveur de contenus.

La figure 2 illustre seulement une manière particulière, parmi plusieurs possibles, de réaliser un terminal lecteur de flux multimédia, afin qu'il effectue les étapes du procédé détaillé ci-après, en relation avec la figure 3 (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

On présente désormais, en relation avec la Figure 3, un exemple de gestion de téléchargement progressif adaptatif entre un serveur de contenu 2 et un terminal client 8, mettant en œuvre un fichier manifeste prédictif.

Le terminal lecteur de flux multimédia 8 est connecté à un terminal de restitution TX (par exemple la clef HDMI 8 est connectée au téléviseur 5 par l'intermédiaire d'une liaison HDMI). Comme décrit ci-dessus en relation avec la figure 2, il comprend notamment un module DISP 302 d'interface avec le terminal de restitution TX, un module DET_URL 300 de détermination des adresses de téléchargement de segments futurs d'un contenu en direct, et un module client HAS 301.

Un serveur de contenus 2 expose un contenu en direct C1 sous forme de segments encodés à différentes qualités Q1, Q2, Q3.

Selon l'art antérieur, un module client HAS est chargé de venir récupérer ces segments auprès du serveur de contenus 2 en choisissant la qualité vidéo Qi en fonction de la ressource réseau disponible. On ne décrit pas ici plus en détail la façon dont le module client HAS choisit le débit d'encodage du prochain fragment vidéo à télécharger : il existe en effet de nombreux algorithmes permettant d'opérer ce choix, dont les stratégies sont plus ou moins sécuritaires ou agressives. On rappelle cependant que, le plus souvent, le principe général de tels algorithmes repose sur le téléchargement d'un premier fragment au débit d'encodage le plus faible proposé dans le manifeste, et sur l'évaluation du temps de récupération de ce premier fragment. Sur cette base, le module client HAS évalue si, en fonction de la taille du fragment et du temps mis pour le récupérer, les conditions réseau permettent de télécharger le fragment suivant à un débit d'encodage plus élevé. Certains algorithmes reposent sur une augmentation progressive du niveau de qualité des fragments de contenu téléchargés ; d'autres proposent des approches plus risquées, avec des sauts dans les niveaux des débits d'encodage des fragments successifs.

Dans le cas classique, si un « chunk » vidéo dure 3 secondes, la récupération du « chunk » par le module client HAS ne doit pas excéder 3 secondes, afin de permettre une restitution sans interruption du contenu par le terminal 8, dans le cas où le client visionne le contenu en direct. Il convient donc pour le module client HAS d'opérer le meilleur compromis entre une qualité de restitution, et donc un débit d'encodage, aussi élevés que possible, et le temps de téléchargement du fragment, qui doit être suffisamment faible pour permettre une restitution en continu sur le terminal de restitution TX.

Au cours d'une étape référencée 303, le module HAS 301 récupère le fichier manifest MPD 7 afin de découvrir les fragments disponibles du contenu vidéo C1, et les différentes qualités vidéo Qi associées.

Dans le mode de réalisation illustré sur la figure 3, lors de la génération du fichier MPD 7, le serveur de contenu 2 construit également une section prédictive SP, décrivant des segments futurs du contenu C1, i.e., des segments qui n'ont pas encore été produits par le serveur de contenus 2, mais qui le seront dans le futur. Par exemple, les segments d'identifiants N+1 à N+M sont des segments futurs qui font l'objet de la section prédictive SP.

A réception du fichier MPD 7, lors de l'étape 303, le module client HAS 301 en fait une analyse, pour déterminer quels sont les segments mis à disposition par le serveur de contenu, à quel niveau de qualité ou de débit d'encodage, et quels sont les segments futurs prédits dans la section SP, ainsi que leur instant de mise à disposition future par le serveur 2.

L'algorithme mis en oeuvre par le module client HAS 301 pour déterminer quel fragment à quel débit d'encodage doit être téléchargé en mode de fonctionnement normal peut être l'un des algorithmes déjà existants de l'art antérieur. Cet algorithme ne sera donc pas décrit ici plus en détail.

Lors de l'analyse du fichier MPD 7, le module DET_URL 300 analyse la section prédictive SP pour construire les adresses de téléchargement des segments futurs N+1 à N+M. Par exemple, si l'identifiant des segments futurs N+1 à N+M est leur timestamp, i.e. leur instant de mise à disposition pour le téléchargement, le module DET_URL 300 construit l'adresse URL des segments futurs N+1 à N+M en remplaçant, dans le modèle d'URL media="155_video_1_2_$Time$.mp4?m=1545421124" donné dans le fichier manifeste 7, l'élément $Time$ par la valeur de l'instant de début t de chacun des segments futurs successivement.

Le cas échéant, cet instant t est calculé en fonction de l'instant t de début du premier segment futur N+1, de sa durée d, et du nombre de répétitions r indiquées dans le fichier MPD 7.

Ces adresses URL, une fois construites, sont par exemple stockées dans la mémoire M, en attendant l'instant t associé à chacun des segments futurs. Un ordonnanceur (en anglais « scheduler ») peut permettre de planifier les instants de mise à disposition des différents segments futurs et programmer l'émission de requêtes de téléchargement de ces segments lorsque l'instant courant correspond à l'instant de leur mise à disposition par le serveur de contenus 2.

Ainsi, lorsque l'instant courant correspond à l'instant t de début de l'un des segments futurs, par exemple le segment N+1, le terminal 8 envoie une requête HTPP 304 de téléchargement de ce segment N+1.

Les différents fragments téléchargés par le module client HAS 301 sont transmis au module d'interface DISP 302 pour leur restitution à l'utilisateur sur l'écran du terminal de restitution TX.

La génération d'un fichier MPD 7 par le serveur de contenus 2 peut s'opérer à une fréquence réduite par rapport aux solutions de l'art antérieur, grâce à l'existence de cette section prédictive SP. Par exemple, le serveur de contenus 2 ne renouvelle la génération du fichier MPD 7 qu'après avoir produit l'ensemble des segments futurs de contenu N+1 à N+M décrits dans la section prédictive SP. On économise ainsi les ressources du serveur 2.

La fréquence de l'étape 303 de récupération du fichier manifeste MPD 7 par le terminal client 8 est ainsi également réduite (par exemple, pour des segments de durée 2s, si M=30, cette fréquence peut être divisée par 30). Cela réduit donc également la consommation de bande passante entre le terminal client 8 et le serveur de contenu 2, ainsi que les ressources du terminal 8 pour lire et analyser le fichier MPD 7.

### Application industrielle

Dans ses différents modes de réalisation, la présente invention peut être mise en oeuvre sur les boîtiers adaptateurs ou décodeurs (en anglais « set top box »), sur la CléTV^{®} d'Orange^{®}, sur les consoles de jeux et généralement sur tous les terminaux consommant des contenus « live » en HAS par l'intermédiaire d'un point d'accès à un réseau de communication, ainsi que sur tous les serveurs de contenu « live » qui réalisent un découpage de flux audio/vidéo en segments et en fournissent une description dans un fichier manifeste.

La présente divulgation ne se limite pas aux exemples de procédé de gestion de téléchargement HAS, de serveur de contenu, de procédé de téléchargement HAS de contenu « live » et de terminal lecteur de flux multimédia décrits ci-avant, seulement à titre d'exemple, mais elle englobe toutes les variantes que pourra envisager la personne du métier dans le cadre de la protection recherchée.

## Revendications

1. Procédé de gestion du téléchargement progressif adaptatif, HAS, d'un contenu numérique en direct depuis un serveur de contenus (2) vers un terminal lecteur de flux multimédia (3, 4, 8), ledit procédé comprenant une génération d'un fichier de description (7) dudit contenu numérique, comprenant une liste de segments temporels dudit contenu, dans lequel ladite génération comprend une construction d'une section prédictive (SP) dudit fichier de description (7), ladite section décrivant, pour au moins un segment futur dudit contenu numérique, un identifiant réservé pour ledit segment futur et une indication temporelle d'un instant à partir duquel ledit segment futur sera disponible pour le téléchargement.

2. Procédé de gestion du téléchargement progressif adaptatif d'un contenu numérique en direct selon la revendication 1, dans lequel ladite section prédictive (SP) décrit, pour ledit au moins un segment futur :
a. un instant de début dudit au moins un segment futur ;
b. une durée dudit au moins un segment futur.

3. Procédé de gestion du téléchargement progressif adaptatif d'un contenu numérique en direct selon la revendication 2, dans lequel lesdits segments temporels de contenu sont de même durée et dans lequel ladite section prédictive (SP) décrit également, pour ledit au moins un segment futur, un nombre de répétitions dudit au moins un segment futur.

4. Procédé de gestion du téléchargement progressif adaptatif d'un contenu numérique en direct selon l'une quelconque des revendications 1 à 3, dans lequel ladite génération dudit fichier de description n'est renouvelée qu'à l'issue d'une production, par ledit serveur de contenus, dudit au moins un segment futur décrit dans ladite section prédictive.

5. Serveur (2) de gestion du téléchargement progressif adaptatif, HAS, d'un contenu numérique en direct, comprenant des moyens de mise en oeuvre du procédé de gestion de téléchargement progressif adaptatif selon l'une quelconque des revendications 1 à 4.

6. Programme informatique comportant des instructions pour la mise en œuvre du procédé selon l'une des revendications 1 à 4 lorsque ce programme est exécuté par un processeur d'un serveur selon la revendication 5.

7. Support d'enregistrement non transitoire lisible par un ordinateur sur lequel est enregistré un programme informatique selon la revendication 6.

8. Procédé de téléchargement progressif adaptatif, HAS, d'un contenu numérique en direct depuis un serveur de contenus (2) par un terminal lecteur de flux multimédia (3, 4, 8), ledit procédé comprenant un téléchargement d'un fichier de description (7) dudit contenu numérique, comprenant une liste de segments temporels dudit contenu, dans lequel ledit fichier de description (7) téléchargé comprend une section prédictive (SP), décrivant, pour au moins un segment futur dudit contenu numérique, un identifiant réservé pour ledit segment futur et une indication temporelle d'un instant à partir duquel ledit segment futur sera disponible pour le téléchargement.

9. Procédé de téléchargement progressif adaptatif selon la revendication 8, comprenant en outre :
a. une construction, à partir de ladite section prédictive, d'adresses de téléchargement d'une pluralité de segments futurs dudit contenu numérique ;
b. un téléchargement (304) de l'un desdits segments futurs de ladite pluralité, à l'adresse de téléchargement construite pour ledit segment futur, à partir de l'instant associé à ladite indication temporelle pour ledit segment futur.

10. Procédé de téléchargement progressif adaptatif selon la revendication 9, dans lequel ledit téléchargement (304) dudit fichier de description n'est renouvelé qu'à l'issue dudit téléchargement de ladite pluralité de segments futurs décrits dans ladite section prédictive.

11. Terminal lecteur de flux multimédia (3, 4, 8) comprenant des moyens de mise en oeuvre du procédé de téléchargement progressif adaptatif, HAS, d'un contenu numérique en direct depuis un serveur de contenus (2) selon l'une quelconque des revendications 8 à 10.

12. Programme informatique comportant des instructions pour la mise en oeuvre du procédé selon l'une des revendications 8 à 10 lorsque ce programme est exécuté par un processeur d'un terminal lecteur de flux multimédia selon la revendication 11.

13. Support d'enregistrement non transitoire lisible par un ordinateur sur lequel est enregistré un programme informatique selon la revendication 12.
